# EUROPEAN PATENT APPLICATION

(11) **EP 3 469 961 A1**
(43) Date of publication of application: **17.04.2019**
(21) Application number: 17196477.8
(22) Date of filing: 13.10.2017
(51) Int. Cl.: A47J 27/21, H05B 1/02, H01G 4/28

(54) **AN APPARATUS FOR HEATING A LIQUID**

(71) Applicant: Vestel Elektronik Sanayi ve Ticaret A.S., 45030 Manisa (TR)
(72) Inventor: ULUAG, Onur, 45030 Manisa (TR); EROL, Oguzhan Iren, 45030 Manisa (TR)
(74) Representative: Whitfield, Ian

(57) **Abstract**

An apparatus (1) for heating a liquid includes an electrical heater (8) and a capacitor (4) connected to the electrical heater (8). The capacitor (4) includes a first terminal (5) and a second terminal (6). Each of the first terminal (5) and the second terminal (6) are cylindrical plates and the first and second terminals (5, 6) are spaced radially from one another.

## Description

### Technical Field

The present disclosure relates to an apparatus for heating a liquid such as water.

### Background

An apparatus, such as a water heater, a hot water dispenser, a boiler, a kettle or the like, that is used to heat a liquid such as water typically includes a reservoir and an electrical heater. The electrical heater is usually a resistive heating element which converts electricity into heat. The electrical heater is mounted in a position where it can connect to a power source. The power source is provided in the form of mains electricity. The electrical heater converts the electricity supplied by the power source into heat. The heat from the electrical heater, which is submerged in the liquid, is conducted into the liquid in the reservoir. Consequently, the temperature of the liquid increases. A thermostat such as a bimetallic strip thermostat is often used to automatically deactivate the power source when a particular temperature is reached. However, heaters for water and the like are often inefficient and/or may heat the water relatively slowly.

### Summary

According to an aspect disclosed herein, there is provided an apparatus for heating a liquid, the apparatus comprising: an electrical heater; and a capacitor connected to the electrical heater, the capacitor comprising a first terminal and a second terminal, wherein each of the first terminal and the second terminal are cylindrical plates and the first and second terminals are spaced radially from one another.

Providing a capacitor within the apparatus allows for a very fast increase of the temperature of liquid held within the apparatus when the heating of the liquid is activated by a user. This causes the liquid within the apparatus to be heated to a predetermined temperature more rapidly than with known apparatus. An advantage of this is that less heat is lost from the liquid to the environment of the apparatus during the process of heating the liquid. This increases the overall efficiency of the heating of the liquid. In addition, the capacitance of the capacitor is maximised by the first and second terminals being cylindrical plates radially spaced from one another.

In an example, the apparatus comprises a housing, wherein the capacitor is provided within the housing.

In an example, the housing comprises one or more walls and the capacitor is embedded within the one or more walls. In an example, the housing comprises one wall. In an example, the housing comprises a plurality of walls.

In an example, the electrical heater comprises an arc generator.

In an example, the electrical heater comprises a resistive heating element.

In an example, the apparatus comprises a capacitor switch configured to enable and disable activation of an electrical connection between the capacitor and the electrical heater.

### Brief Description of the Drawings

To assist understanding of the present disclosure and to show how embodiments may be put into effect, reference is made by way of example to the accompanying drawings in which:
Figure 1 shows schematically a lateral cross-sectional view of an example of an apparatus for heating a liquid including a capacitor; and
Figure 2 shows schematically a perspective partial cross-sectional view of the capacitor of Figure 1.

### Detailed Description

An apparatus, such as a water heater, a hot water dispenser, a boiler, a kettle or the like, that is used to heat a liquid such as water typically includes a reservoir and an electrical heater. The electrical heater is usually a resistive heating element which converts electricity into heat. The electrical heater is mounted in a position where it can connect to a power source. The power source is provided in the form of mains electricity. The electrical heater converts the electricity supplied by the power source into heat. The heat from the electrical heater, which is submerged in the liquid, is conducted into the liquid in the reservoir. Consequently, the temperature of the liquid increases. A thermostat such as a bimetallic strip thermostat is often used to automatically deactivate the power source when a particular temperature is reached.

The heating of a liquid in a known apparatus is slow, which results in a potentially relatively large portion of the heat transferred from the electrical heater to the liquid being lost to the environment. Consequently, heating of a liquid with a known apparatus is inefficient.

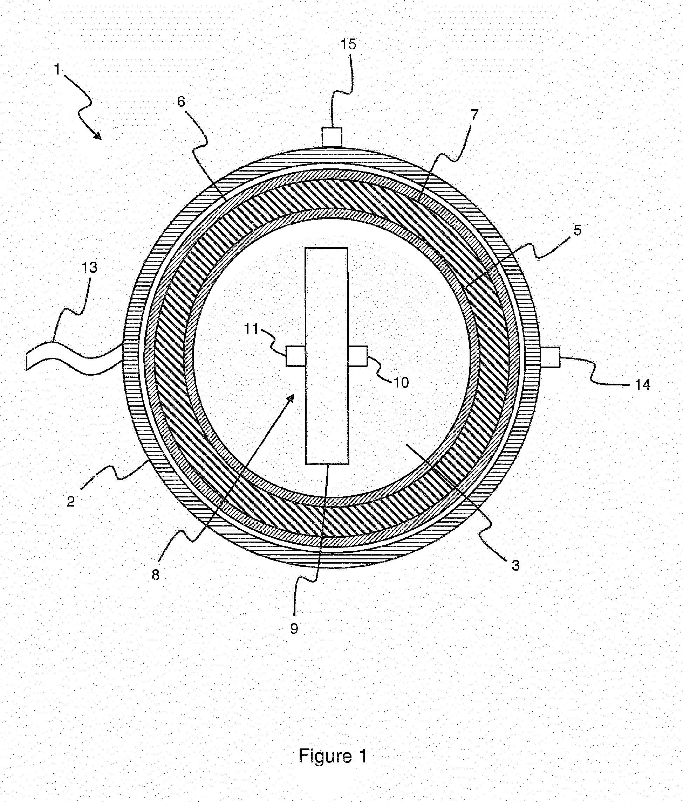

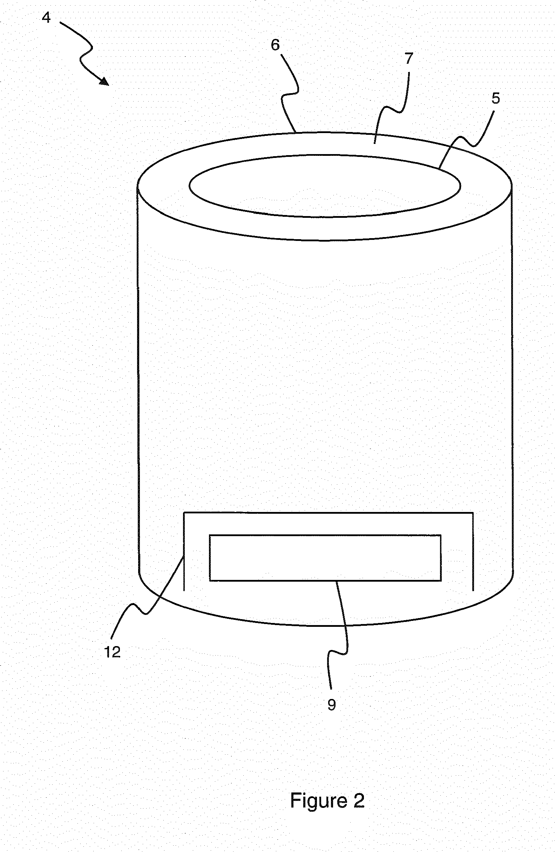

Referring now to Figures 1 and 2, there is shown schematically an example of an apparatus 1 for heating a liquid according to the present disclosure. In this example, the apparatus 1 is a domestic kettle and the liquid is water. In other examples, the apparatus 1 may be another apparatus that is suitable for heating a liquid, such as a hot water dispenser, a water heater, a boiler, a coffee machine, a vehicle's windshield water heater or the like. In other examples, the liquid may be another liquid that requires heating.

The apparatus 1 includes a housing 2 having one or more walls that define a reservoir 3 for receiving and holding the liquid. The housing 2 and the reservoir 3 in this example are both cylindrical. Therefore, in this example, the housing 2 includes only one wall. In other examples, the housing 2 and the reservoir 3 may be another shape so long as the shape of the reservoir 3 is suitable for holding a quantity of a liquid. Indeed, in other examples, the housing 2 and the reservoir 3 may be shaped differently to one another.

The apparatus 1 includes a capacitor 4. In this example, the capacitor 4 is provided within the housing 2. The capacitor 4 is therefore embedded within the housing 2. In particular, in this example, the capacitor 4 is confined within the wall of the housing 2. The capacitor 4 includes a first terminal 5 and a second terminal 6. In this example, the first terminal 5 and the second terminal 6 are both cylindrical plates which are concentrically arranged. In this example, the capacitor 4 has the same shape as the housing 2. In this specific example, the housing 2 has a circular cross-sectional shape and, correspondingly, the first terminal 5 and the second terminal 6 of the capacitor 4 have a circular cross-sectional shape. In another example, the housing 2 and/or the first terminal 5 and the second terminal 6 may have another cross-sectional shape, such as square, rectangular or hexagonal etc. The first terminal 5 and the second terminal 6 are spaced radially from one another with the first terminal 5 provided radially inward of the second terminal 6. The capacitor 4 also includes a dielectric insulator material 7 provided between the first terminal 5 and the second terminal 6. In this example, the dielectric material 7 is glass. In other examples, the dielectric material 7 may be any material through which no (or little) current will flow when a voltage is applied to the material, such as a plastic, mica, porcelain or a metal oxide, etc. Since the first and second terminals 5, 6 each have a cylindrical shape, the capacitance (i.e. the charge capacity) of the capacitor 4 is maximised whilst still allowing it to be provided within the housing 2. In an example, the capacitor 4 may include a plurality of layers of terminals with respective layers of dielectric insulator material between pairs of terminals to increase its capacitance.

The capacitor 4 is connected to an electrical heater 8. The electrical heater 8 is located within the reservoir 3 so that the capacitor 4 can discharge stored electrical energy to the electrical heater 8 to heat liquid held within the reservoir 3. In this example, the electrical heater 8 is an arc generator 9. The arc generator 9 is configured to produce an electrical arc within the liquid held in the reservoir 3 when it is supplied with electrical energy. The arc generator 9 has a grid structure and includes an anode electrical terminal 10 and a cathode electrical terminal 11. An arc protector 12 in the form of a shield is provided adjacent the arc generator 9. The arc protector 12 helps to prevent human contact with the arc generator 9.

In another example, the electrical heater 8 may be another type of electrical heater that can heat a liquid, such as a resistive heating element. The apparatus 1 may have more than one type of electrical heater, such as having both an arc heater and a resistive heater. In such a case, the apparatus 1 may have switches or some controller by which the user can select which type of electrical heater is used at any particular time.

The apparatus 1 also provides for a connection 13 to a source of electricity, such as a mains electricity connection. The source of electricity may be used to supply electrical energy directly to the electrical heater 8 to heat the liquid contained in the reservoir 3. The source of electricity may alternatively or additionally be used to supply electrical energy to the capacitor 4 for storage within the capacitor 4. In this example, the apparatus 1 also includes a heating switch 15 that is configured to activate and deactivate the direct electrical connection between the electrical heater 8 and the mains electricity connection. Therefore, when a user presses the heating switch 15, the electrical heater 8 heats any liquid held in the reservoir 3. The heating switch 15 is also configured to activate and deactivate the electrical connection between the electrical heater 8 and the capacitor 4. Therefore, when a user presses the heating switch 15, electrical energy stored in the capacitor 4 is transferred to the electrical heater 8, which then rapidly heats any liquid held in the reservoir 3. In an example, the apparatus also includes a capacitor switch 14 that is configured to enable and prevent the pressing of the heating switch 15 activating the electrical connection between the capacitor 4 and the electrical heater 8. When the capacitor switch 14 is deactivated, electrical heater 8 is only supplied with electricity directly from the mains electricity connection. However, when the capacitor switch 14 is activated, the electrical heater 8 is supplied with electrical energy from both the capacitor 4 and the mains electricity connection. The apparatus 1 also includes a thermostat (not shown) provided to automatically turn off the power to the electrical heater 8 when it senses that the contents of the reservoir has reached a predetermined temperature.

An example of use of the apparatus 1 will now be described with reference to Figures 1 and 2.

Initially, whilst the electrical heater 8 is deactivated, the capacitor 4 is charged with electrical energy via the mains electricity connection. Ideally, the capacitor 4 is charged until it reaches its charge capacity.

If a user wants to use the apparatus 1 to heat a quantity of a liquid, the user first at least partially fills the reservoir 3 of the apparatus 1 with the liquid.

The user then presses the heating switch 15. Pressing the heating switch 15 activates the electrical connection between the capacitor 4 and the electrical heater 8, which in this example is an arc generator 9. This causes the capacitor 4 to discharge its stored electrical energy to the arc generator 9. The arc generator 9 uses the electrical energy from the capacitor 4 to generate an electrical arc within the liquid held in the reservoir 3, which quickly increases the temperature of the liquid. In this example, pressing the heating switch 15 also activates the electrical connection between the mains electricity connection and the electrical heater 8. This causes electrical energy to be supplied directly to the arc generator 9 from the mains electricity connection. When the capacitor 4 has emptied its charge, the arc generator 9 uses the electrical energy to maintain electrical arc within the liquid held in the reservoir 3 to further increase the temperature of the liquid.

The electrical connection between the mains electricity connection and the electrical heater 8 stays activated, and thus the electrical arc is maintained, until the temperature of the liquid in the reservoir 3 reaches a predetermined temperature. When the temperature of the liquid in the reservoir 3 reaches the predetermined temperature, the thermostat deactivates the electrical connection between the mains electricity connection and the electrical heater 8 is deactivated. In this example, since the apparatus 1 is a domestic kettle and the liquid is water, the predetermined temperature is 100°C.

Whilst the electrical heater 8 is deactivated, the capacitor 4 is recharged with electrical energy via the mains electricity connection until its charge capacity is reached.

The provision of a capacitor 4 within the apparatus 1 allows for a very fast increase of the temperature of the liquid held within the reservoir 3 of the apparatus 1 when heating of the liquid is activated by the user. This causes the liquid within the reservoir 3 to be heated to its predetermined temperature more rapidly than with known apparatus. An advantage of this is that less heat from the liquid is lost to the environment during the process of heating the liquid, which increases the overall efficiency of the heating of the liquid, thereby reducing overall power consumption.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An apparatus for heating a liquid, the apparatus comprising:
an electrical heater; and
a capacitor connected to the electrical heater, the capacitor comprising a first terminal and a second terminal, wherein each of the first terminal and the second terminal are cylindrical plates and the first and second terminals are spaced radially from one another.

2. An apparatus according to claim 1, comprising a housing, wherein the capacitor is provided within the housing.

3. An apparatus according to claim 2, wherein the housing comprises one or more walls and the capacitor is embedded within the one or more walls.

4. An apparatus according to any of claims 1 to 3, wherein the electrical heater comprises an arc generator.

5. An apparatus according to any of claims 1 to 4, wherein the electrical heater comprises a resistive heating element.

6. An apparatus according to any of claims 1 to 5, comprising a capacitor switch configured to enable and disable activation of an electrical connection between the capacitor and the electrical heater.
